# EUROPEAN PATENT APPLICATION

(11) **EP 1 719 617 A1**
(43) Date of publication of application: **08.11.2006**
(21) Application number: 05103668.9
(22) Date of filing: 03.05.2005
(51) Int. Cl.: B32B 27/36, A63C 5/00

(54) **Decoration of a multi-layered device, especially a (winter) sports apparatus**

(71) Applicant: IMS KUNSTSTOFF AG, 3076 Worb (CH)
(72) Inventor: Breukers, Zef, 6136, GM Sittard (NL)
(74) Representative: Hepp, Dieter

(57) **Abstract**

The claimed process is related to the application of a decoration to a device, especially a winter sports apparatus, wherein the decoration comprises an especially ink-jetted or toner-based decoration layer, and wherein the decoration is covalently bound to the substrate via an adhesive surface coating applied to the substrate prior to printing. The decoration according to the invention allows for achieving a remarkably improved stability and delamination resistance of the winter sports apparatus.

## Description

The invention is related to a semi-finished sheet product for manufacturing of a winter sports apparatus, a process of applying a decoration to a sports apparatus, a winter sports apparatus according to the independent claims.

A winter sports apparatus such as e.g. skis and snowboards possess a core structure, commonly made from wood or synthetic material such as urethane foam. A ski further possesses a reinforcing, upper layer ("Obergurt"), made from synthetic fibers such as e.g. glass, carbon or aramids, typically connected to the core structure by e.g. an epoxy resin. As next-outer layer, a plastic protective layer is currently always provided, usually referred to as top surface. On the backside of the transparent protective layer, decorations such as text, images or the like are applied. The protective layer is applied in order to provide abrasion- and impact resistance, and needs to withstand dynamic load and temperature conditions which are common in outdoor use. Typically, additional lacquers or varnishes are applied for increased scratch and UV resistance and control of glossy or matt surface appearance.

For the decoration of especially area-measured devices such as the above-mentioned winter sports apparatusses, several techniques are currently in use, such as e.g. silk screen printing (a discontinuous, costly technique) or dye sublimation (a technique which requires high temperatures and which exhibits a relatively high transfer failure rate).

From the Austrian patent AT 406 340 and the corresponding European Patent EP 936 080 a process for the decoration of skis is known, making use of known digital printing processes such as digital ink jet printing using conventional inks, or digital plotting to the backside of the protective sheet. The decoration is applied to the inwards directed side of the protective layer. Digital ink jet printing or plotting is mostly a rather slow process, additionally commonly resulting in horizontal lines within the image, thus hampering the aesthetic appearance of the decoration. A major disadvantage is, in addition, that a binding enhancer (commonly referred to as a "primer") needs to be applied in order to achieve sufficient binding of the inks onto the protective layer. Moreover, suchlike applied decoration is prone to blurring under heat/press cycles routinely applied during lamination of skis.

The manufacture of a winter sports apparatus involves several lamination steps of different layers, typically comprising heated press cycles of heating in the range of e.g. up to 90-140°C or even higher, typically for about 5 to 20 minutes at pressures of about 2 to 15 bars; conventional color agents such as e.g. toners or solvent based or aqueous inks would not be stable under these conditions, thus blurring of the decoration would occur. Thus, conventional thermoplastic toners with glass transition temperatures in the range of about 50°C to 80°C and melting temperatures below 120°C, and conventional solvent-based and aqueous ink-jet inks are not preferably suitable for such processes.

The patent applications EP 04001355.9, EP 04013693.9 and EP 05100337.4 disclose the use of chemically crosslinked decoration layers especially in winter sports devices, wherein the decoration layers may be also directly crosslinked with the a substrate to which the decoration layer was applied to. Although this approach already significantly enhanced the delamination resistance at the interface of decoration layer and substrate, when compared to conventional non-crosslinked decoration layers, the delamination resistance has been found to be still not sufficient e.g. for competition skis which need to durably withstand high deformation forces.

It is thus an object of the present invention to overcome the shortcomings of the prior art, especially to provide a process for the decoration of a device with a multi-layered structure, especially a winter sport apparatus, which is cost-saving, easily to implement, which allows for an efficient work-flow in the production of the device and which fulfills the needs of a maximum of delamination-resistance and high resolution of the decoration.

These objects are met by a semi-finished sheet product, wherein a decoration layer is covalently bound to a substrate via an adhesive surface coating, a process of applying a decoration to a winter sports apparatus by providing such a semi-finished sheet product, a winter sports wherein a decoration layer is covalently bound to the substrate via an adhesive surface coating, according to the independent claims.

The invention inter alia relates to a semi-finished sheet product for manufacturing of a device, preferably a sports apparatus, most preferably a winter sports apparatus, comprising
- a preferably white basic layer, made from or essentially comprising plastic, most preferably made from or essentially comprising polyethylene terephtalate, and carrying an especially ink-jetted decoration layer; and/or
- an at least partially transparent protective sheet, made from or essentially comprising plastic, and carrying an especially ink-jetted decoration layer; and/or
- a running surface, made from or essentially comprising plastic, carrying an especially ink-jetted decoration layer,
wherein the decoration layer is covalently bound to the basic layer and/or the protective sheet and/or the running surface via an adhesive surface coating.

Preferably, the decoration layer is thereby configured suchlike to withstand heated press cycles of:
- temperatures of greater than 120°C, preferably of greater than 140°C, most preferably greater than 160°C; and
- pressures of more than 2 bar, preferably more than 10 bar, most preferably more than 15 bar;
without blurring of the decoration to occur.
Most preferably, the glass transition temperature of the composition of the decoration layer thereby is higher than about 120°C, preferably higher than 130°C, most preferably higher than 140°C.

Such a semi-finished product is resistant to blurring of the decoration under normal heat press cycles typically applied in e.g. ski and snowboard manufacturing. Morevover, delamination within the decoration layer and/or to adjacent layers, especially a protective layer made of Duraclear 92078, Duraclear 92161 or Duraclear 92204 (IMS Kunststoffe AG, Worb, Switzerland), is avoided, especially under dynamic shear loads commonly occurring in use of e.g. skis or snowboards.

In contrast to EP 04001355.9, EP 04013693.9 and EP 05100337.4, the chemically crosslinked decoration layer is not directly applied onto the substrate such as e.g. the basic layer, running surface or protective sheet, but the decoration layer is instead covalently bound to the basic layer and/or the protective sheet and/or the running surface via an adhesive surface coating. Surprisingly it has now been found, albeit a covalent cross-linking most likely already occurred at the interface of decoration layer and substrate according to EP 04001355.9, EP 04013693.9 and EP 05100337.4, that an adhesive surface coating in between decoration layer and substrate, which is covalently bound to both the substrate and the decoration layer, even more enhances the delamination resistance at the interface of decoration layer and substrate.

As used herein, the term adhesive surface coating is understood as to not comprise conventional "primers" (which are e.g. used in AT 406 340 and the corresponding European Patent EP 936 080), which are coated onto a substrate in order to promote the adhesion of another outer layer by only physically balancing the different properties of the involved materials. In contrast thereto, an adhesive surface coating according to the present invention is to be understood as to covalently bind to the substrate and to the material to be coated thereon, e.g. a decoration layer.

According to a further preferred embodiment, the especially ink-jetted decoration layer is chemically crosslinked within itself and with an adjacent adhesive surface coating. As a chemically crosslinked decoration layer, any such decoration layer may be suitably applied such as those disclosed in EP 04001355.9, EP 04013693.9 and EP 05100337.4; the disclosure of these documents is incorporated herein by reference, especially with respect to the composition and application of chemically crosslinked decoration layers. Such chemically crosslinked decoration layers are most preferably derived from at least one radiation-curable color agent, preferably UV-curable color agents, most preferably UV-curable ink-jet inks. However, also other chemically crosslinkable color agents may be applied such as UV-curable toners, heat-curable-, moisture-curable-, time-curable- or otherwise crosslinkable color agents may be used.

According to a preferred embodiment of the present invention, the adhesive surface coating possesses a layer thickness of about 5nm to about 100nm, preferably about 10nm to about 60nm. Most preferably, the adhesive surface coating is a mono-molecular layer.

Especially preferred adhesive surface coatings to be used in the context of the present invention are those which are disclosed in WO 00/24527 and/or WO 01/58971, respectively. The disclosure of both these documents is enclosed herein by reference, especially with respect to the chemical composition of suitable adhesive surface coatings, the process of applying such adhesive surface coatings, and the process of covalently binding a coating (in the present invention e.g. a crosslinked/crosslinkable color agent) onto a substrate via such adhesive surface coatings. In brief, according to WO 00/24527 and/or WO 01/58971 a substrate is firstly to be coated is chemically activated by forming free-radical sites on the surface of the substrate (e.g. by plasma discharge, high energy UV-radiation or electron radiation).

Subsequently, according to WO 00/24527, at least one photoinitiator containing at least one ethylenically unsaturated group is allowed to react with and to covalently couple to the free-radical sites previously generated on the substrate. A coating (in the present invention: a decoration layer) is then applied onto the adhesive surface coating, wherein the coating comprises at least one ethylenically unsaturated component, which is subsequently chemically crosslinked, e.g. cured by means of UV radiation. Thereby, the coating (here: the decoration layer is covalently crosslinked with the adhesive surface coating, which in turn is covalently crosslinked to the substrate. Especially preferred photoinitiators are known in the art, and e.g. possess the following general formula (RG)-A-(IN), or (IN) -A- (RG') -A-(IN), wherein (IN) is a photoinitiator base structure; (A) is a spacer or a single bond; (RG) denotes at least one ethylenically unsaturated group; (RG') is a divalent radical that contains at least one functional ethylenically unsaturated group. A vast number of specific examples of suitable photoinitiators for use in the context of the present invention, and methods of preparation thereof, can be found disclosed and/or referenced in WO 00/24527. The currently preferred photoinitiator for use in the context of the present invention is available on the market under the label Prime It™ from Ciba Speciality Chemicals.

According to WO 01/58971, at least one electron- or H-donor, e.g. a primary, secondary, or tertiary amine, a thiol or a thioether or a mixture thereof, either oligomeric or polymeric, each containing at least one ethylenically unsaturated group, is allowed to react with and to covalently couple to the free-radical sites previously generated on the substrate. A coating (in the present invention: a decoration layer), comprising a photoinitiator and/or a thermally activatable initiator, e.g. an organic peroxide, is then applied onto the adhesive surface coating, wherein the coating comprises at least one ethylenically unsaturated component, which is subsequently chemically crosslinked, e.g. cured by means of UV radiation. Thereby, the coating (here: the decoration layer) is covalently crosslinked with the adhesive surface coating, which in turn is covalently crosslinked to the substrate. A vast number of specific examples of suitable electron- or H-donors for use in the context of the present invention, as well as suitable photoinitiators, and methods of preparation thereof, respectively, can be found disclosed and/or referenced in WO 01/58971.

It is to be understood, that the photoinitiator and/or the electron- or H-donor, as discussed above, may either itself comprise the ethylenically unsaturated group in one and the same molecule and/or may be supplemented, e.g. as a mixture, solution, dispersion or emulsion, with monomers and/or oligomers containing at such ethylenically unsaturated group(s), in order to enhance covalent crosslinking. Suitable combinations of photonitiators and supplemented compounds comprising ethylenically unsaturated groups are e.g. disclosed in WO 03/064061, WO 2005/014874 and WO 2005/021824; the disclosure of these documents is incorporated herein by reference.

Having in mind the intention to covalently crosslink the decoration layer of the present invention with an adhesive surface coating, which in turn is covalently crosslinked to the substrate, and further being aware of the disclosure of both WO 00/24527 and/or WO 01/58971, the person of routine skill in the art will easily choose and evaluate the most suitable adhesive surface coating compositions and methods of applying and subsequently coat these compositions, depending on the specific needs of delamination resistance to be provided. Most preferably, at least one chemically crosslinked/crosslinkable color agent in a decoration layer, such as those disclosed in EP 04001355.9, EP 04013693.9 and EP 05100337.4, is applied onto an adhesive surface coating as previously described.

Most preferably, the adhesive surface coating is first covalently bound to the substrate, and afterwards the decoration layer is covalently bound to the adhesive surface coating. Alternatively, especially in the case of both reaction being dependent on the same outer influence such as e.g. UV radiation, and if no blurring of the decoration occurs e.g. due to unwanted mixing of decoration layer and adhesive surface coating, the covalent crosslinkings may both be carried out simultaneously, thus saving time and costs. If this approach is appropriate for a certain combination of adhesive surface coating and decoration layer can be easily evaluated by the person or routine skill in the art by test experiments.

According to yet another preferred embodiment, the semi-finished product is obtainable by a process involving the steps of:
- applying a decoration layer (2) comprising at least one crosslinkable substance, especially an ink, to a substrate, especially a basic layer (3), a protective sheet (4) or a running surface;
- crosslinking the at least one crosslinkable substance, especially the ink, by appliance of an outer influence,
characterized in that an adhesive surface coating is applied onto the substrate prior to the application of the decoration layer, which adhesive surface coating is allowed to covalently attach to the substrate and/or the decoration layer.

It is especially preferred that crosslinking of the adhesive surface coating and/or the color agent especially of a decoration layer is performed by a process involving heat, moisture or irradiation such as UV-, microwave-, infra-red- or electron-beam-irradiation.

According to yet another preferred embodiment, the adhesive surface coating is attached onto the substrate by a preferably radical grafting reaction; however, also an ionic grafting reaction may prove especially useful for certain applications and will thus be chosen in the context of the present invention by the person of routine skill in the art. The preferably radical grafting reaction may be initiated by initially providing free radical sites on the substrate by any known means such as e.g. plasma treatment, or high-energy electromagnetic radiation in vacuo or with exclusion of oxygen; radiations that are capable to generate free radicals on a substrate's surface are well known to the person of routine skill in the art, e.g. short-wave UV radiation (especially in vacuo) or X-ray, electron beams, or the like.

According to another especially preferred embodiment, the adhesive surface coating comprises at least one photoinitiator, containing at least one ethylenically unsaturated group, being allowed to react with free radical sites provided on the substrate. Such photoinitiators proved especially useful for reacting with free radicals provided on the surface of the substrate, thus forming a covalent linkage between substrate and adhesive surface coating.

According to yet another proferred embodiment, the at least one photoinitiator is moreover allowed to react with at least one ethylenically unsaturated component of the decoration layer (e.g. a color agent), thereby forming an outstandingly robust covalent linkage of the decoration layer to the substrate via the adhesive surface coating.

Alternatively or besides the above-mentioned at least one photoinitiator, the adhesive surface coating may comprise at least one electron- or H-donor, containing at least one ethylenically unsaturated group. Such at least one electron- or H-donor is allowed to react with free radical sites provided on the substrate, as outlined above. Subsequently, the at least one electron- or H-donor is allowed to react with at least one ethylenically unsaturated component of the decoration layer, and wherein an initiator may be provided in the decoration layer, which initiator may be either a thermally activatable initiator, or preferably a photoinitiator.

According to yet another preferred embodiment, a protective sheet or running surface is applied to the basic layer carrying the decoration, by means of an adhesive; and/or a core construction is applied to the protective sheet or the running surface, inwardly carrying the decoration, by means of an adhesive.

A semi-finished product according to the invention may be supplied to the manufacturer of the final device e.g. pre-assembled (e.g. laminated) to the protective top surface layer or running surface. After commonly used heat press cycles of the production line of e.g. ski and snowboard manufacturing, additional protective lacquers or varnishes may be applied.

Yet another aspect of the present invention relates to a process of applying an especially ink-jetted decoration to a sports apparatus, preferably a winter sports apparatus, comprising the steps of:
- providing a semi-finished product, comprising a substrate and carrying the decoration, the decoration layer being covalently connected to the substrate via an adhesive surface coating as outlined above;
- attaching the semi-finished product to a core construction of the device;
- and optionally, applying an outer protective sheet and/or a protective-lacquer or -varnish to the basic layer, facing outwards of the device, wherein the protective sheet and/or the protective-lacquer or -varnish is at least partially transparent in the area of the decoration.

Still another aspect of the present invention is related to a winter sports apparatus possessing a multi-layered structure, comprising an especially ink-jetted decoration layer on a basic layer and/or a protective sheet and/or a running surface, preferably a semi-finished sheet product as outlined above, and wherein the decoration layer is covalently bound to the basic layer and/or the protective sheet and/or the running surface via an adhesive surface coating, as outlined above.

Accordingly, yet another aspect of the present invention relates to the use of at least one photoinitiator, containing at least one ethylenically unsaturated group, in an adhesive surface coating and/or use of at least one electron- or H-donor, containing at least one ethylenically unsaturated group, in an adhesive surface coating, for covalently attaching a decoration layer to a winter sports apparatus.

According to the invention, the glass transition temperature of the especially ink-jetted decoration is preferably increased by chemically crosslinking the decoration to a level at which it will withstand the above-mentioned parameters of temperature and pressure, especially at least for times of about 5 to 20 minutes, remain stable, and does not flow, i.e. to avoid especially blurring of the decoration, visible by the unaided eye.

Upon applying the decoration to a basic layer which is intended to form an inner part of the assembled device, a more flexible material can be chosen for the basic layer in contrast to the prior art, thus facilitating the application of the decoration. However, according to the invention it is also possible and preferred to directly apply the decoration to the inwards-directed side of the at least partially transparent protective sheet. Due to the subsequent crosslinking of the decoration on the protective sheet (which is previously equipped with an adhesive surface coating as outlined above), it was now surprisingly found that a significantly enhanced bonding strength of the ink-jetted decoration towards the protective sheet was achieved in parallel. The bonding strength and delamination resistance is again strikingly enhanced in comparison to applying a crosslinkable color agent directly to the substrate, and especially in comparison to conventional primers.

According to the invention, it is moreover possible to directly apply a decoration to the inwards-directed side of an at least partially transparent running surface of a winter sports apparatus, if so desired.

Especially, if a mutually transparent basic layer is chosen, the decoration may be applied on only one single or even both area-measured sides thereof. The decoration may furthermore be oriented suchlike within the finished device to face either outwards or inwards, when a transparent basic layer is chosen. According to the prior art, the decoration was applied directly onto the inwards directed face of an outer, transparent protective sheet, which is relatively thick and stiff, whereby an efficient work-flow (i.e. separate production, supply and storage of semi-finished products, e.g. decorations) in the production of the device was hampered.

The use of ink-jet technology allows for a larger variety of substrates to be printed on as e.g. compared to laser printing, because the substrate does not need to be temporarily charged for the transfer of the color agent. Moreover, the disadvantage of conventional ink jet printing or plotting, i.e. being a rather slow process, additionally commonly resulting in horizontal lines within the image (known as "bending lines"), has been overcome by recent developments in ink-jet technology. For example, the *the Dotfactory* digital ink-jet press (Agfa-Dotrix, Ghent, Belgium) works with fixed colorbars covering the whole width of the substrate, one for each color. Thus, this process is rather rapid and does not generate horizontal lines as known from conventional ink-jet printers.

Alternatively, also crosslinkable dry toners may be used according to the invention. Especially by using dry toners, series of at least two crosslinkable color agents may be applied, being crosslinkable with each other and/or to other adjacent layers such as e.g. a basic layer, a protective sheet or a running surface.

By using a crosslinkable substance, especially an ink-jettable ink, covalently linked to the substrate via an adhesive surface coating, a remarkably improved resistance against delamination under dynamic load is achieved, both within the decoration and especially at the interface to adjacent layers such as e.g. a reinforcing layer ("Obergurt" or "Untergurt") and an outer surface such as e.g. the protecting sheet or the running surface of a ski or snowboard, which was a major drawback of the prior art. Surprisingly, it has now been found that chemically crosslinked color agents such as e.g. UV-cured ink-jettable inks, together with an adhesive surface coating as outlined above, again strikingly enhance the strength of the bonding to both adjacent layers in a ski construction. By crosslinking of the ink and the adhesive surface coating, a 3-dimensional covalent framework is established, whereby delamination can be efficiently prohibited. Moreover, when applied onto an adhesive surface coating as outlined above, irradiation-cured inks, preferably UV-cured inks will not become unstable, will not flow, nor will they cause blurring of the decoration during further manufacturing in e.g. presses under high temperatures, such as commonly applied in the production of a winter sports apparatus such as e.g. ski or snowboard. The formulation of UV- and electron-beam curing ink systems is commonly known in the art (e.g. reviewed in *"*The printing ink manual", 5th Edition 1993; Blueprint (Chapman & Hall); R.H. Leach, R.J. Pierce (Eds.); Chapter 11; included herewith by reference) and may be easily adapted for special purposes by the person of routine skill in the art. Most commonly, an "initiator package" is included in the ink (e.g. benzophenone as initiator and triethanolamine as a synergist), together with prepolymer resins containing activated carbon-carbon double bonds such as e.g. polyurethane acrylate, polyester acrylate and epoxy acrylate. Therefore, these inks can easily be crosslinked with the adhesive surface coating as outlined above.

As used herein, a winter sports apparatus may be any kind of device intended for use on snow and/or ice, e.g. skis, snowboards, etc.; according to the invention, the decoration may be applied either to the top surface or the running surface of the device. The invention is especially useful for devices that are exposed to dynamic loads such as shear load. It is obvious to the person of routine skill in the art to implement the invention also to other sports and/or outdoor devices such as e.g. skate-boards, surf-boards, etc..

As used herein, the term color agent comprises any kind of substances known in the art for coloration and/or decoration of substrates. Preferred color agents are especially ink-jetable inks; however, dry toners may also be used, especially applied in separate, inter-crosslinkable layers. In ink-jet technology, the differently colored inks (e.g. CMYK) are routinely ink-jetted only besides each other; half-tones of colors are achieved for the unaided eye by arranging dots of the basic colors besides each other which occasionally might coagulate to 'mixed' droplets of ink in case they flow into each other, before being crosslinked. However, for special applications such as e.g. photographic prints, inks with lower pigment content are arranged in up to three layers (e.g. Canon PhotoRealism). In any case, the ink is chemically crosslinked according to the invention, whereby a 3-dimensional framework is obtained.

As used herein, the term crosslinking is used in the sense of chemical crosslinking. Crosslinking may thereby occur via an ionic or, especially preferred, a radical pathway. For crosslinking of the adhesive surface coating and the color agents such as the ink-jettable ink, especially any kind of outer influence, especially an irradiation source suitable for initiation of an ionic and/or radical pathway may be used. Preferably, curing and/or crosslinking is effected by means of microwave or radio frequency, infra-red, electron beam or, especially preferred, ultra-violet (UV). Most preferably, curing and/or crosslinking is based on the presence of activated carbon-carbon double bonds such as acrylates, methacrylates, allyl, styrenyl or vinyl. Although crosslinking by means of irradiation is preferred, any other suitable process known in the art of polymerization may be applied for crosslinking of the different color agents. Thus, any kind of initiation may be applied such as e.g. moisture-curing and/or -crosslinking systems and/or heat-curing and/or -crosslinking systems. Moreover, chemically blocked reagents (such as deactivated isocyantes or the like; deactivation of isocyanates with e.g. 1° or 2° aliphatic amines, di- or polyamines, hydrazine derivatives, amidines or guanides is known to the person of routine skill in the art) or micro-encapsulated reagents (both to liberate by either moisture, heat, irradiation or the like) may be used.

In a preferred embodiment of the present invention, the irradiation curable color agents, preferably ink-jettable UV-curable inks such as the Agorix® series from Agfa-Dotrix, are applied onto the adhesive surface coating by means of a digital printing process, preferably a high resolution digital press, most preferably an ink-jet digital press. Preferred digital ink-jet presses are commercially available, e.g. *TheDotFactory* (Agfa-Dotrix NV, Ghent, Belgium); or the like. A special advantage of *TheDotFactory* is that the printing station covers the whole width of the substrate to be printed on. Thus, the substrate passes the stationary color bars only once, allowing for a high throughput. Due to the fixed colorbars, the horizontal lines commonly occurring in conventional ink-jet appliances are also prevented. Moreover, it is preferred that an in-line UV-curing unit immediately follows e.g. the SPICE® ink jet unit, using preferably mercury-doped and/or iron-doped high power UV-lamps. Thereby, covalent crosslinking of the decoration layer and the adhesive surface coating is achieved.

Because of the demanding requirements of the ski industry towards dynamic loading and lamination strength, it is a general advantage of ink-jet technology described above and in conjuction with the ink-jettable, UV-curable inks together with the adhesive surface coating as outlined above, that it allows for a larger variety of substrates to be printed on as e.g. compared to laser printing, because these substrates do not need to be temporarily charged for the transfer of the color agent as in xerographic technologies. Thus, well-known materials to ski and snowboard manufacturers such as e.g. Duraclear ABS/TPU top surfaces and e.g. P-Tex (UHMW)PE running bases can be easily decorated and can meet the demanding requirements of the industry.

Moreover, a variety of materials in principle suitable for the application in terms of impact strength and other important properties could previously not be used as top surfaces in decorated skis, because only insufficient bonding strength could be achieved between these materials and the conventional (silk-screened or dye sublimated or non-crosslinked, ink-jetted decoration. Exemplarily, high-transparency and high-toughness polypropylenes (such as Clyrell 7173XCP, Basell, Hoofddorp, The Netherlands), or pure TPUs such as Elastollan 1174D (Elastogran, Lemförde, Germany) could not be used as a top surface material, since bonding of these materials onto a ski or snowboard was technically not possible: delamination occurred under dynamic load at the interface between the decoration and the top surface material, e.g. the protective sheet and/or the running surface. However, according to the invention, it was now surprisingly found that a decoration, consisting of a layer of a chemically crosslinked substance, especially UV-cured inks, work as a bonding enhancer to such materials by in-situ formation of a three dimension chemical network most likely also between these materials and the inks used as decoration, especially a covalent bonding between the decoration and the substrate via an adhesive surface coating. A large variety of surface materials is suitable in combination with the method of decoration described herein, e.g. extrudable COC polymers (Topas®, Ticona, Frankfurt, Germany), polycarbonates (Lexan®, General Electric Plastics, Bergen op Zoom, The Netherlands) or PC blends, such as PC/PET and others, as well as polyamides such as PA 11, PA 12 (Rilsan®, Atofina Chemicals, Paris-La Defense, France) and amorphous polyamides, such as extrudable Trogamid® grades (Degussa, Marl, Germany).

According to an especially preferred embodiment, the protective layer itself can also be made of a UV-crosslinkable lacquer, e.g. Lumillux 003 and 008 provided by Mäder Lacke (Killwangen, Switzerland). Protective layers may thus be provided as foils of thickness of 0.01 to 0.1 mm, which are excellently compatible with additional decorations according to the invention due to their highly related, e.g. urethane acrylate-based chemistry.

According to an especially preferred embodiment, the basic layer to be attached to the core construction of the device is made from plastic, especially comprising polyethylene terephtalate (PET)(e.g. Melinex 329K, Dupont de Nemours, Wilmington, DE, USA). Most preferably, the basic layer is white in order to aid the appearance of the decoration; especially white basic layers are preferred in order to 'hide' undesired patterns, roughnesses and discolorations of underlying layers. Most preferably, the basic layer is only about 50 - 75 µm thick; after decoration of such a basic layer, a lacquer or varnish is applied directly onto the decoration as a protective sheet, thus reducing the overall weight of the final device.

For both the connection of the protecting sheet or running surface to the especially multi-layered structure and the connection of the especially multi-layered surface to the reinforcing layer ("Obergurt" or "Untergurt") of the device, suitable adhesives known to the person of routine skill in the art are preferably used. These adhesives need to be adapted to the materials to be connected and may be applied as bulk material or film. As an alternative, e.g. surface flame treatment with a Pyrosil® additive (Sura Instruments, Jena, Germany) may be used for attachment of the decorated basic layer to the core construction.

The invention will now be described by means of figures and examples in more detail, without the invention being limited to these preferred embodiments.
- Fig. 1:: partial side-view of a multi-layered device according to the invention; decoration applied on a basic layer;
- Fig. 2:: partial side-view of a multi-layered device according to the invention; decoration applied on the inwards-directed side of the protective sheet.
- Fig. 3:: schematic illustration of covalently attaching a decoration layer to a substrate via an adhesive surface coating.

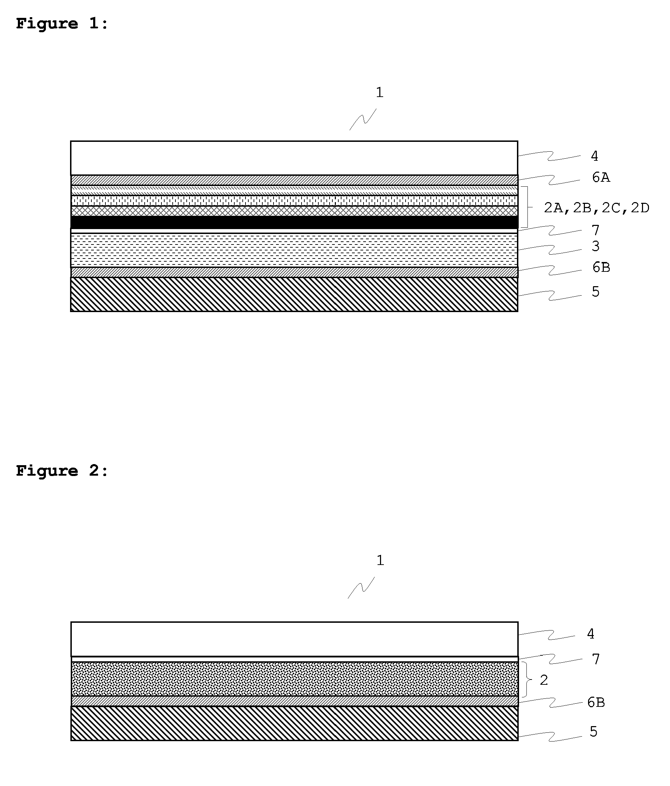

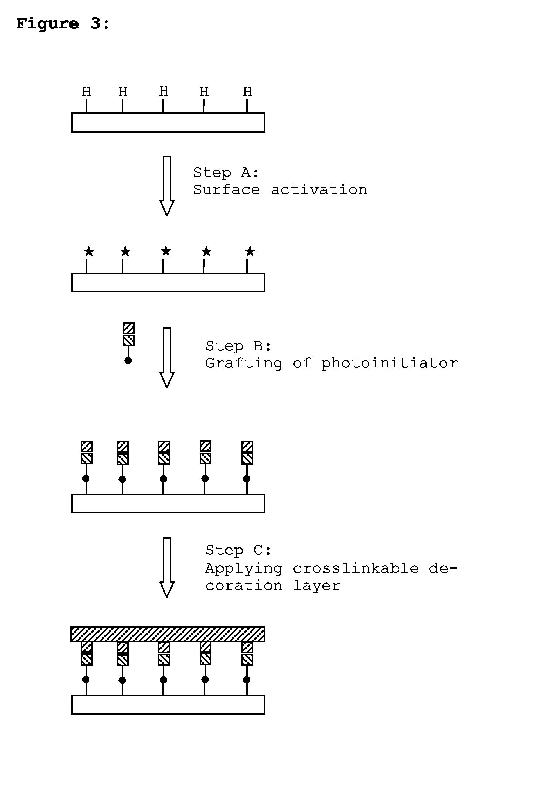

As shown schematically in Figure 1, a device 1, especially a winter sports apparatus, possessing a multi-layered structure is built up on a core construction 5. In case of the device 1 being a ski, snowboard or the like, the core construction 5 is mostly made from epoxy resin such as 100 parts by weight of Araldite 136N with e.g. 35 parts by weight of Araldite HY 991 (Vantico, Huntsman, Eversberg, Belgium). An adhesive surface coating 7 (such as e.g. Prime It™ from Ciba Speciality Chemicals) is applied to the basic layer 3, which adhesive surface coating will be more explicitly illustrated in Fig. 3. The device 1 comprises a decoration made up from at least one layer, exemplarily at least two layers of irradiation curable color agents 2A,2B,2C,2D contained in a decoration layer 2, which is applied to a basic layer 3 carrying the adhesive surface coating 7, preferably by means of a digital printing process such as ink-jet printing. Irradiation, here UV-curing and crosslinkable color agents 2A, 2B, 2C, 2D, preferably inks are commonly available e.g. ProJet T1A from Avecia Ink Jet Printing Materials (Blackley, Manchester, England). Alternatively to inks, crosslinkable dry toners may also be used as color agents according to the invention. Suitable toners were prepared by mixing and homogenizing commercially available dry toners with equally grain-sized, crosslinkable components such as triallyl isocyanurate (TAIC; Sartomer, Exton, PA, USA). In any case, the necessary amount of the crosslinkable component to be added to the color agent in order to achieve a sufficient increase of the glass transition temperature Tg of the decoration is easily to determine by routine experiments of the person of routine skill in the art. Target is to ensure a vitrificated stage of the crosslinked color agent, especially the crosslinked ink under conditions used in the ski or snowboard press. The basic layer 3 is e.g. Melinex 329W (Dupont de Nemours, Wilmington, DE, USA) However, the protective layer may, instead of a thermoplastic, also be a UV-crosslinked lacquer, made of or essentially comprise a crosslinked substance, especially made of or essentially comprising a crosslinked ink, such as Lumillux 003, made by Mäder Lacke (Killwangen, Switzerland). According to the invention, especially irradiation curable and crosslinkable color agents, preferably inks in a decoration layer 2 are used for the decoration, whereby a strikingly enhanced bonding especially to the protective sheet and/or the basic layer, as well as to a standard (UHMw)PE running base material is achieved. A semi-finished laminated sheet product comprising the basic layer 3, the adhesive surface coating 7 and the decoration layer 2 may be produced, stored and supplied (e.g. on rolls) separately from the production of device 1, thus facilitating logistic needs significantly. Such a semi-finished laminated sheet is to be connected to the protecting sheet 4, e.g. by means of a suitable adhesive 6A, e.g. a polyurethane-based, thermoplastic adhesive film such as e.g. Puro L (Collano Xiro AG, Schweiz). Thermosetting adhesives, such as one-component urethane based systems or suitable epoxy resin systems, can also be utilized to achieve this. As a protecting sheet 4, Duraclear (IMS Kunststoff AG, Worb, Switzerland) was chosen with a thickness in the range of about 0.2 mm to about 1mm, preferably in the range of about 0.6 mm. Moreover, an appropriate adhesive 6B may also be chosen for the connection of the basic layer 3 to the core construction 5; in this embodiment, Puro L (Collano Xiro AG, Schmitten, Switzerland) was chosen, too. The choice of suitable adhesives for any mentioned connection, however, is within the routine knowledge of the person skilled in the art; especially, hot melt adhesives, preferably based on co-polyester resins, such as XAF 37.204 and XAF 37.304 (Collano Xiro AG, Schmitten, Switzerland) may also be used. For the connection of the basic layer 3 to the core construction 5, a flame treatment of the PET basic layer with Pyrosil® flame additives as provided by Sura Instruments (Jena, Germany) may be used in order to improve the bonding strength of the adhesive system onto the PET film.

If two layers 2A, 2B, 2C, 2D of irradiation curable color agents are used, these layers are applied by means of a digital printing process, preferably a high resolution digital press. Preferred high resolution digital presses are commercially available, e.g. Xeikon DCP 320/500 simplex or duplex machines (Xeikon International, Lier, Belgium); HP Indigo w3200 digital press (HP Indigo, Maastricht, The Netherlands); Agfa Chromapress (Agfa-Gevaert, Mortsel, Belgium); Xerox Docucolor 70 and 100 (Xerox Corp., Stamford, CT, USA), IBM Infocolor 3170 and IBM Infoprint Color 130 (IBM Corp., Armonk, NY, USA); or the like. Such high resolution digital presses are especially preferred because of their high quality of reproduction (600 dpi or even higher) and their capacity. Preferably, the layer thickness of each color agent is within the range of about 5 to 8 µm. However, also conventional computer-based ink-jet printing, laser printing, etc. is applicable within the concept of the present invention. Due to the ease of computer-based image-processing, disadvantages of e.g. silk screen printing and offset printing, where further technical equipment for each separate image or decoration is necessary, are overcome.

Fig. 2 schematically shows a further, especially preferred embodiment according to the invention. The decoration layer 2 may be directly applied via an adhesive surface coating 7 on the inwards-directed face of the protective layer 4, preferably ink-jetted, and finally UV-curing of the ink-jetted decoration. Thuslike, a remarkably delamination-resistent semi-finished product comprising the protective layer 4 and the decoration layer 2 is achieved. This semi-finished product can be fixed to the core construction 5 of a ski e.g. by means of an adhesive 6B, e.g. an epoxy resin. Commonly, the connection of the core construction (e.g. made from wood or foamed plastics with fibre reinforced layers on each side ("Obergurt" and "Untergurt") is rather stable and thus not the critical interface. Thuslike, the much more critical interface between the decoration and especially unusual protective layers such as e.g. high-transparency and high-toughness PP-copolymers and highly scratch resistant pure TPU polymers or the like is overcome by the use of the adhesive surface coating as outlined above.

It is to be understood, that according to the invention the decoration may also be directly applied by a method as outlined above to the inwards-directed surface of an at least partially transparent running surface of e.g. a ski, if so desired.

Figure 3 schematically illustrates the application of an adhesive surface coating comprising a photoinitiator as described above, as is used in the context of the present invention. First, a substrate such as a basic layer, protective sheet or running surface is provided. The surface of the substrate is then activated in step A, e.g. by plasma treatment or high-energy radiation, whereupon free radicals are generated on the surface of the substrate (illustrated by the asterisks). Afterwards, a photoinitiator is chemically grafted onto the substrate in step B by allowing it to react with the free radical sites previously generated on the surface of the substrate. Thereupon, the photoinitiator is covalently linked to the substrate, in contrast to conventional primers, which are only physically coated onto a substrate. Subsequently, a crosslinkable decoration layer is applied thereon in step C. Upon crosslinking the decoration layer by means of e.g. UV-radiation, also a covalent linkage is established to the grafted photoinitiator. Thus, the decoration layer gets covalently linked to the substrate via the grafted photoinitiator.

### Comparative Embodiment:

This embodiment underlines the enhanced bonding strength of crosslinked, e.g UV-cured, ink-jetted decoration layers, together with an adhesive surface coating, compared to conventionally applied ink-jet decorations. All decorations were printed onto Duraclear 92078 (IMS). Aluminium plates and epoxy resin were used analogous to Comparative Embodiment 1; lamination and the drum peeling test was also performed analogous to Comparative Embodiment 1. The following decorated laminates were tested:
1.A: A decoration was printed on the inwards-directed side of a Duraclear 92078 (protective sheet, thickness 0.60 mm) substrate by means of a conventional ink-jet plotter (with Galaxy JA 256/30 LQ printing heads (Spectra Inc.) and using Sunjet Crystal SOV ink (SunChemical). The drum peeling test of the resulting laminate resulted in a value of less than 1N/mm, which is not acceptable especially for ski decoration purposes.
1.B: A decoration was printed on the Duraclear 92078 (protective sheet, thickness 0.60 mm) substrate by means of a Roland Soljet Pro II plotter, model SJ-540 (Plotdesign (Agent of Roland DG), Hedel, Netherlands). The solvent-based CMYK inks PDS (Plotdesign (Agent of Roland DG), Hedel, Netherlands) were used for printing.
   The drum peeling test of the resulting laminate resulted in a value of less than 1 N/mm, which is not acceptable especially for ski decoration purposes.
2. A decoration was printed onto the Duraclear 92078 (protective sheet, thickness 0.60 mm) substrate of 0.45mm thickness by means of the *TheDotFactory* technology as outlined above (Agfa-Dotrix), including plasma pre-treatment of the substrate. UV-curable ink Avecia ProJet T1A (Avecia, Manchester, UK) was used for printing of the decoration.
   The drum peeling test of the resulting laminate resulted in a value of about 3 to 4 N/mm, which is acceptable especially for cross-country-ski decoration purposes.
3. A decoration was printed onto the Duraclear 92078 (protective sheet, thickness 0.60 mm) substrate by means of the *TheDotFactory* as outlined above (Agfa-Dotrix), including plasma pre-treatment of the substrate, and using therewith supplied UV-curing inks (Agorix®, Agfa-Gevaert, Mortsel, Belgium).
   The drum peeling test of the resulting laminate resulted in a value of about 4 to 6 N/mm, which is acceptable especially for snowboard decoration purposes.
4. A decoration was printed onto the Duraclear 92078 (protective sheet, thickness 0.60 mm) substrate, previously equipped with an adhesive surface coating Prime It™ (Ciba Speciality Chemicals) according to manufactrer's instructions, by means of the *TheDotFactory* as outlined above (Agfa-Dotrix), and using therewith supplied UV-curing inks (Agorix®, Agfa-Gevaert, Mortsel, Belgium).
   The drum peeling test of the resulting laminate resulted in a value of about 8 to 11 N/mm, which is acceptable especially for ski highly demanding decoration purposes such as e.g. alpine skis, especially for competition skis or the like.

Apparently, the strength of the bonding within the laminate is strikingly enhanced (examples 2 to 4) especially by using UV-crosslinked inks as a decoration layer on an adhesive surface coating, applied to a protective sheet e.g. made from Duraclear 9207

## Claims

1. Semi-finished sheet product for manufacturing of a winter sports apparatus (1), comprising
• a preferably white basic layer (3), made from or essentially comprising plastic, and carrying an especially ink-jetted decoration layer (2); and/or
• a preferably at least partially transparent protective sheet (4), made from or essentially comprising plastic, and carrying an especially ink-jetted decoration layer (2); and/or
• a preferably at least partially transparent running surface, made from or essentially comprising plastic, and carrying an especially ink-jetted decoration layer (2),
**characterized in that** the decoration layer (2) is covalently bound to the basic layer (3) and/or the protective sheet (4) and/or the running surface via an adhesive surface coating (7), which is covalently bound to the basic layer (3) and/or the protective sheet (4) and/or the running surface.

2. Semi-finished product according to claim 1, **characterized in that** the adhesive surface coating (7) possesses a layer thickness of about 5nm to about 100nm, preferably about 10nm to about 60nm.

3. Semi-finished product according to one of claims 1 or 2, **characterized in that** the adhesive surface coating (7) is a mono-molecular layer.

4. Semi-finished product according to one of claims 1 to 3, **characterized in that** the glass transition temperature of the composition of the decoration is higher than about 120°C, preferably higher than 130°C, most preferably higher than 140°C.

5. Semi-finished sheet product according to one of claims 1 to 4, carrying a decoration, **characterized in that** the especially ink-jetted decoration layer (2) is chemically crosslinked within itself and with an adjacent adhesive surface coating (7).

6. Semi-finished product according to one of claims 1 to 5, obtainable by a process involving the steps of:
• applying a decoration layer (2) comprising at least one crosslinkable substance, especially an ink, to a substrate, especially a basic layer (3), a protective sheet (4) or a running surface;
• crosslinking the at least one crosslinkable substance, especially the ink, by appliance of an outer influence,
**characterized in that** an adhesive surface coating (7) is applied onto the substrate prior to the application of the decoration layer (2), which adhesive surface coating (7) is allowed to covalently attach to the substrate and/or the decoration layer (2).

7. Semi-finished product according to claim 6, wherein crosslinking is performed by a process involving heat, moisture or irradiation such as UV-, microwave-, infra-red- or electron-beam-irradiation.

8. Semi-finished product according to one of claims 6 or 7, **characterized in that** the adhesive surface coating (7) is attached onto the substrate by a preferably radical grafting reaction.

9. Semi-finished product according to one of claims 6 to 8, **characterized in that** the adhesive surface coating (7) comprises at least one photoinitiator, containing at least one ethylenically unsaturated group.

10. Semi-finished product according to claim 9, **characterized in that** the at least one photoinitiator is allowed to react with free radical sites provided on the substrate.

11. Semi-finished product according to one of claims 9 or 10, **characterized in that** the at least one photoinitiator is allowed to react with at least one ethylenically unsaturated component of the decoration layer (2).

12. Semi-finished product according to one of claims 6 to 11, **characterized in that** the adhesive surface coating (7) comprises at least one electron- or H-donor, containing at least one ethylenically unsaturated group.

13. Semi-finished product according to claim 12, **characterized in that** the at least one electron- or H-donor is allowed to react with free radical sites provided on the substrate.

14. Semi-finished product according to one of claims 12 or 13, **characterized in that** the at least one electron- or H-donor is allowed to react with at least one ethylenically unsaturated component of the decoration layer (2), and wherein an initiator is provided in the decoration layer (2), which initiator may be either a thermally activatable initiator, or preferably a photoinitiator.

15. Semi-finished product according to claim 10 or 13, **characterized in that** the free radical sites are provided on the substrate by subjecting said substrate to a low-temperature plasma discharge, a corona discharge, high-energy UV-radiation or electron beam radiation.

16. Semi-finished product according to one of claims 1 to 15, wherein the basic layer (3) is made from plastic, most preferably comprising polyethylene terephtalate.

17. Semi-finished product according to one of claims 1 to 16, wherein a protective sheet (4) or running surface is applied to the basic layer (3) carrying the decoration, by means of an adhesive; and/or a core construction (5) is applied to the protective sheet (4) or the running surface, inwardly carrying the decoration, by means of an adhesive.

18. Process of applying an especially ink-jetted decoration to a sports apparatus, preferably a winter sports apparatus, comprising the steps of:
• providing a semi-finished product according to one of claims 1 to 17, carrying the decoration;
• attaching the semi-finished product to a core construction (5) of the device (1); and
• optionally, applying an outer protective sheet and/or a protective-lacquer or -varnish to the basic layer, facing outwards of the device (1), wherein the protective sheet and/or the protective-lacquer or -varnish is at least partially transparent in the area of the decoration.

19. Winter sports apparatus possessing a multi-layered structure, comprising an especially ink-jetted decoration layer (2) on a basic layer and/or a protective sheet (4) and/or a running surface, preferably a semi-finished sheet product according to one of claims 1 to 17, and wherein the decoration layer (2) is covalently bound to the basic layer (3) and/or the protective sheet (4) and/or the running surface via an adhesive surface coating (7).

20. Use of at least one photoinitiator, containing at least one ethylenically unsaturated group, in an adhesive surface coating (7) and/or use of at least one electron- or H-donor, containing at least one ethylenically unsaturated group, in an adhesive surface coating (7), for covalently attaching a decoration layer (2) to a winter sports apparatus.
